# EUROPÄISCHE PATENTSCHRIFT

(11) **EP 4 323 721 B1**
(45) Veröffentlichungstag und Bekanntmachung des Hinweises auf die Patenterteilung: **03.09.2025**
(21) Anmeldenummer: 22721033.3
(22) Anmeldetag: 06.04.2022
(51) Int. Cl.: G01B 11/24, F24C 7/08, F24C 15/16

(54) **VERFAHREN ZUM BETREIBEN EINES GARGERÄTS UND GARGERÄT**
METHOD FOR OPERATING A COOKING APPLIANCE, AND COOKING APPLIANCE
PROCÉDÉ D'UTILISATION D'UN APPAREIL DE CUISSON, ET APPAREIL DE CUISSON

(30) Priorität: 12.04.2021 BE 202105283
(43) Veröffentlichungstag der Anmeldung: 21.02.2024
(73) Patentinhaber: Miele & Cie. KG, 33332 Gütersloh (DE)
(72) Erfinder: LÄSSIG, Hannes, 33615 Bielefeld (DE)
(86) Internationale Anmeldenummer: PCT/EP2022/059105
(87) Internationale Veröffentlichungsnummer: WO 2022/218775

(56) Entgegenhaltungen:
- DE-A1- 102013 110 642
- DE-A1- 102016 107 617
- US-A1- 2014 041 530
- US-B2- 10 674 569

## Beschreibung

Die vorliegende Erfindung betrifft ein Verfahren zum Betreiben eines Gargeräts mit einem Garraum zur Aufnahme eines auf einem Gargutträger positionierten Garguts, einer Behandlungseinrichtung zur Behandlung des Garguts, einer Steuereinrichtung zur Steuerung zumindest der Behandlungseinrichtung sowie mit einer Bildaufnahmeeinrichtung zur Aufnahme von Bildern des Garraums. Ferner betrifft die vorliegende Erfindung ein entsprechendes Gargerät.

Heutige Gargeräte besitzen eine Vielzahl von Assistenz- und Automatikfunktionen zur selbsttätigen Erkennung von Informationen über das Gargut. Auf Basis dieser Daten kann der Garprozess präzise auf das zuzubereitende Gargut abgestimmt werden, wodurch ein besseres Garergebnis erzielt wird. Insbesondere sind für diesen Zweck 3D-Informationen über das Gargut nützlich, weil sich daraus z.B. Rückschlüsse auf die Art, die Masse, die Menge und/oder andere Eigenschaften des Garguts ziehen lassen, anhand derer der Garprozess optimal angepasst werden kann.

3D-Informationen über das Gargut lassen sich beispielsweise mit 3D-Kameras, wie Stereokameras oder Kamerasystemen mit mehreren Kameras bzw. mehreren Objektiven erhalten. Die Implementierung derartiger Kamerasysteme ist jedoch aufwendig und kostenintensiv.

Aus der Druckschrift US 2014 041 530 A1 ist ein gattungsgemäßer Ofen zum Backen von Lebensmittelprodukten bekannt, wobei der Ofen zur Verbesserung automatisierter Erhitzungsvorgänge eine Kamera und einen Abstandssensor aufweist, welche zusammen eingesetzt werden, um eine präzise Extraktion von Produktmerkmalen zu ermöglichen, die bei automatisierten Erhitzungsvorgängen relevant sind und verwendet werden.

Aus der Druckschrift DE 10 2019 204 531 A1 ist es bekannt, eine fest installierte und auf das Gargut gerichtete Kamera in Verbindung mit einer beweglichen Projektionseinrichtung zu verwenden, die aus unterschiedlichen Orientierungen Linien auf das Gargut projiziert. Aus einer Mehrzahl von 2D-Bildern mit jeweils unterschiedlichen Projektionen auf dem Gargut können 3D-Informationen über das Gargut berechnet werden. Nachteilig an diesem Verfahren ist jedoch, dass die Installation einer derartigen Projektionseinrichtung mit einem hohen Herstellungs- und Kostenaufwand verbunden ist.

Es ist daher Aufgabe der vorliegenden Erfindung, ein verbessertes Verfahren sowie ein entsprechendes verbessertes Gargerät bereitzustellen, mit dem 3D-Informationen zuverlässig erhalten und insbesondere die Nachteile des Standes der Technik vermieden werden.

Diese Aufgabe wird durch ein Verfahren gemäß dem Anspruch 1 gelöst. Ferner wird diese Aufgabe durch ein Gargerät gemäß dem Anspruch 8 gelöst. Bevorzugte Merkmale sind Gegenstand der Unteransprüche. Weitere Vorteile und Merkmale sind der allgemeinen Beschreibung sowie den Ausführungsbeispielen zu entnehmen.

Das erfindungsgemäße Verfahren dient zum Betreiben eines Gargeräts mit einem Garraum zur Aufnahme eines auf einem Gargutträger positionierten Garguts. Das Gargerät weist eine Behandlungseinrichtung zur Behandlung des Garguts, eine Steuereinrichtung zur Steuerung zumindest der Behandlungseinrichtung sowie eine Bildaufnahmeeinrichtung zur Aufnahme von Bildern des Garraums auf. Das Verfahren zeichnet sich dadurch aus, dass mittels der Bildaufnahmeeinrichtung von dem Gargut eine Mehrzahl von zeitlich hintereinander aufgenommenen 2D-Bildern erstellt wird. Auf diesen 2D-Bildern befindet sich der Gargutträger jeweils in einer anderen Einschubposition, wobei die Einschubposition zumindest hinsichtlich ihrer Einschubhöhe und/oder ihrer Einschubtiefe variiert wird. Aus dem Vergleich geometrischer Daten des Garguts auf den 2D-Bildern werden 3D-Informationen über die Form und/oder die Abmessungen des Garguts generiert und diese 3D-Informationen bei der Steuerung der Behandlungseinrichtung berücksichtigt.

Zur Variation des Aufnahmeblickwinkels der Bildaufnahmeeinrichtung auf das Gargut wird bei dem erfindungsgemäßen Verfahren auf die variierbare Einschubposition des das Gargut tragenden Gargutträgers abgestellt, der z.B. in Form eines Rosts oder Backblechs vorliegt. Der in der Regel parallel zum Garraumboden ausgerichtete Gargutträger kann dabei bezüglich seiner Einschubtiefe, d.h. parallel zum Garraumboden, und/oder in seiner Einschubhöhe, d.h. senkrecht zum Garraumboden, verschoben werden. Dies bietet eine besonders einfache und kosteneffiziente Möglichkeit, 2D-Bilder aus unterschiedlichen Blickwinkeln aufzunehmen. Anhand der Kenntnis der Lage des Garguts in Relation zur Bildaufnahmeeinrichtung können der jeweilige Aufnahmeblickwinkel bestimmt und aus mehreren 2D-Bildern mit unterschiedlichen Blickwinkeln 3D-Informationen über das Gargut berechnet werden. Die so gewonnenen 3D-Informationen können bei der Steuerung der Behandlungseinrichtung, insbesondere zur Steuerung von Automatik-Garprogrammen, berücksichtigt werden, so dass das Garergebnis erheblich verbessert werden kann. Da die Einschubposition des Gargutträgers im Zuge des Betriebs des Gargeräts in der Regel zumindest einmal variiert wird (z.B. beim Einschieben des Gargutträgers in den Garraum), kann in diesen Fällen die Aufnahme der 2D-Bilder parallel zum üblichen Bedienvorgang des Gargeräts und somit diskret und vom Bediener unbemerkt stattfinden.

Insbesondere ist beim erfindungsgemäßen Verfahren zur Gewinnung von 3D-Informationen über das Gargut weder eine aufwendige Kameratechnik noch eine bewegliche Projektionseinrichtung notwendig. Vielmehr ist das erfindungsgemäße Verfahren mit einer herkömmlichen und insbesondere fest installierten Kamera durchführbar, wie sie in einer Vielzahl von Gargeräten bereits eingesetzt wird. Bei Gargeräten, die bereits über eine Bildaufnahmeeinrichtung, z. B. in Form einer in den Garraum gerichteten (2D-)Kamera, ausgestattet sind, kann das erfindungsgemäße Verfahren kostengünstig implementiert bzw. nachgerüstet werden, etwa durch ein einfaches Software-Update. Bevorzugt umfasst die Bildaufnahmeeinrichtung eine insbesondere fest installierte Kamera.

Vorzugsweise wird vorliegend als 2D-Bild jegliche Art von Datensatz verstanden, der mittels eines von der Bildaufnahmeeinrichtung umfassten optischen Sensors aufgenommen wird, welcher Daten zu Farbwerten von einzelnen Messpunkten und/oder Messflächen aufnimmt und insbesondere zum Zwecke der Auswertung zur Verfügung stellt. Als Farbwert wird hierbei insbesondere eine Koordinate einer Farbe in einem mehrdimensionalen Farbraum (z. B. RGB, CIELAB, CIEJUV, etc.) verstanden.

Als geometrische Daten des Garguts bzw. des Gargutträgers auf den 2D-Bildern werden insbesondere die Abmessungen (Länge, Breite, ggf. Durchmesser), die Fläche, die Form und/oder die Kontur des Garguts bzw. des Gargutträgers verstanden. Als 3D-Informationen über das Gargut werden insbesondere die Abmessungen des Garguts in drei Dimensionen, z.B. in drei zueinander senkrecht verlaufenden Richtungen (Länge, Breite, Höhe), verstanden. Insbesondere werden als 3D-Informationen über das Gargut ferner das Volumen, die Form, die Kontur und/oder die Oberflächenbeschaffenheit des Garguts verstanden.

Bevorzugt weist das Gargerät und/oder die Bildaufnahmeeinrichtung eine Auswerteeinrichtung auf, mit der die aufgenommenen 2D-Bilder zur Generierung der 3D-Informationen über das Gargut ausgewertet werden. Alternativ oder zusätzlich kann die Auswertung zumindest teilweise extern, z. B. auf einem Server oder in einer Cloud, erfolgen, wobei das Gargerät und/oder die Bildaufnahmeeinrichtung hierzu mit entsprechenden Kommunikationsschnittstellen ausgestattet sein können. Bevorzugt ist die Auswerteeinrichtung dazu geeignet und ausgebildet, geometrische Daten des Garguts und/oder des Gargutträgers auf den 2D-Bildern zu erfassen und zu vergleichen. Vorzugsweise ist die Auswerteeinrichtung dazu geeignet und ausgebildet, anhand der aus unterschiedlichen Aufnahmeblickwinkeln aufgenommenen 2D-Bilder 3D-Informationen über das Gargut zu generieren. Insbesondere ist die Auswerteeinrichtung dazu geeignet und ausgebildet, anhand der 3D-Informationen Rückschlüsse auf die Art, die Menge, die Masse und/oder weitere Eigenschaften des Garguts zu schließen. Die Auswertung der 2D-Bilder und/oder der 3D-Informationen umfasst vorzugsweise das Vergleichen der Daten mit Referenzen in einer Datenbank, insbesondere wobei eine Klassifizierung des Garguts und/oder des Gargutträgers mittels statistischer und/oder analytischer Methoden, wie z.B. einer Varianzanalyse und/oder einer (Support Vector-)Regression, erfolgt. Alternativ oder zusätzlich kann die Auswertung eine Klassifizierung des Garguts und/oder des Gargutträgers anhand eines künstlichen neuronalen Netzwerkes, insbesondere anhand eines vorab mit einer Vielzahl von Referenzen trainierten künstlichen neuronalen Netzwerkes und/oder mittels Deep-Learning, umfassen. Im Anschluss an die Auswertung können der Steuereinheit in Abhängigkeit des Ergebnisses der Auswertung bestimmte Steuersignale zur Steuerung der Behandlungseinrichtung übermittelt werden. Insbesondere ist die Auswerteeinrichtung Teil der Steuereinrichtung oder die Steuereinrichtung dient gleichzeitig als Auswerteeinrichtung. Alternativ können die Auswerteeinrichtung als eigenständige Einheit mit einem Prozessor, einem Speicher, Kommunikationsschnittstellen und/oder weiteren Komponenten zur elektronischen Datenverarbeitung ausgebildet und mit der Steuereinrichtung des Gargeräts - drahtlos oder drahtgebunden - datenübertragend verbunden sein.

Im Sinne dieser Erfindung kommen als Gargeräte Herde, Backöfen, Backofen-Kombigeräte mit Dampfgar- und/oder Mikrowellenfunktion, Backöfen mit Hochfrequenztechnik sowie Mikrowellenherde in Betracht. Insbesondere wird im Rahmen der vorliegenden Erfindung auch Auftaugut als Gargut verstanden, welches z. B. durch moderates Erwärmen behandelt, d.h. aufgetaut werden kann.

Vorzugsweise umfasst die Behandlungseinrichtung zumindest eine thermische Heizquelle zur thermischen Behandlung des Garguts und/oder zumindest einen Hochfrequenzerzeuger zur dielektrischen Erwärmung des Garguts. Die Behandlungseinrichtung kann dabei eine Unterhitze, eine Oberhitze, eine Grillbeheizung und/oder einen mit einem Ringheizkörper ausgestatteten Umlüfter als thermische Heizquelle umfassen. Insbesondere umfasst die Behandlungseinrichtung einen Dampferzeuger. Anhand der 3D-Informationen über das Gargut oder anhand der aus den 3D-Informationen abgeleiteten Eigenschaften des Garguts wird insbesondere der Leistungseintrag der Behandlungseinrichtung eingestellt. Beispielsweise kann die Dauer und/oder Taktung einer thermischen Heizquelle zur thermischen Behandlung des Garguts und/oder eines Hochfrequenzerzeugers zur dielektrischen Erwärmung des Garguts eingestellt werden. Möglich ist auch, dass anhand der 3D-Informationen über das Gargut oder anhand der aus den 3D-Informationen abgeleiteten Eigenschaften des Garguts eine Programmauswahl und/oder Programmanpassung erfolgt. Beispielsweise kann in Abhängigkeit einer ermittelten Masse des Garguts die Gardauer eines Programms verlängert oder verkürzt und/oder die Gartemperatur eines Programms erhöht oder gesenkt werden. Auch das Generieren von zum Gargut passenden Programmvorschlägen, welche zur Auswahl durch den Nutzer ausgegeben werden können, ist möglich.

In einer bevorzugten Ausgestaltung der Erfindung werden bei der Generierung der 3D-Informationen die jeweiligen Einschubpositionen des auf den unterschiedlichen 2D-Bildern abgebildeten Gargutträgers miteinander verglichen. Durch den Vergleich der gut erfassbaren Einschubposition des Gargutträgers kann die jeweilige Lage des Garguts in Relation zur Bildaufnahmeeinrichtung besonders präzise ermittelt werden, was die Generierung besonders aussagekräftiger 3D-Informationen ermöglicht.

In einer erfindungsgemäßen Ausgestaltung wird eine Variation der Einschubposition des Gargutträgers zwischen unterschiedlichen 2D-Bildern sensorisch ermittelt. Dies ermöglicht eine automatische und zuverlässige Bestimmung der Lage des Gargutträgers und des sich darauf befindenden Garguts in Relation zur Bildaufnahmeeinrichtung sowie der Variation der Einschubposition zwischen zwei 2D-Bildern. Anhand dieser Informationen lassen sich 3D-Informationen über das Gargut besonders präzise ermitteln. Beispielsweise kann die Einschubposition des Gargutträgers mittels berührungsempfindlicher Sensoren (z.B. mittels elektromechanischer Schalter) und/oder berührungsloser Sensoren (z.B. mittels optischer, kapazitiver oder induktiver Sensoren) erfasst werden. Derartige Sensoren können beispielsweise im Bereich der in der Regel an den Seitenwänden des Garraums angeordneten und etwa in Form von Führungsschienen vorliegenden Gargutträgeraufnahmen angeordnet sein. Erfindungsgemäß weist das Gargerät motorisch verstellbare Gargutträgeraufnahmen (z.B. in Form eines Teleskopeinzugs) auf, wobei die hierfür vorgesehenen Steuer- oder Regelsignale zur Bestimmung der genauen Einschubposition verwendet werden.

Erfindungsgemäß wird eine Variation der Einschubposition des Gargutträgers zwischen den unterschiedlichen 2D-Bildern mittels einer Bildauswertung ermittelt. Da die Geometrie und/oder das Aussehen der jeweiligen für das Gargerät kompatiblen Gargutträger in der Regel bekannt ist, kann die Einschubposition durch eine Auswertung beispielsweise geometrischer Daten des Gargutträgers auf dem jeweiligen 2D-Bild - wie z.B. dessen äußere Kantenlängen und/oder dessen Fläche - besonders präzise ermittelt werden. Dies ermöglicht die Generierung besonders zuverlässiger 3D-Informationen. Ferner kann auf diese Weise auch auf weitere Sensorik zur Ermittlung der Einschubtiefe und/oder der Einschubhöhe des Gargutträgers verzichtet werden, wodurch das Verfahren besonders kostengünstig implementierbar ist, etwa durch ein einfaches Software-Update. Die Ermittlung der Einschubposition mittels Bildauswertung kann jedoch auch zusätzlich zu einer sensorischen Ermittlung der Einschubposition erfolgen.

In einer weiteren bevorzugten Ausgestaltung der Erfindung werden zur Ermittlung der Variation der Einschubposition des Gargutträgers zwischen unterschiedlichen 2D-Bildern spezielle Markierungen auf dem Gargutträger berücksichtigt. Auf diese Weise können bei der Bildauswertung alternativ oder zusätzlich zu der in der Regel vorab bekannten Geometrie und/oder dem Aussehen des Gargutträgers weitere optisch erkennbare Merkmale auf dem Gargutträger berücksichtigt werden, wodurch eine präzisere Ermittlung der Einschubposition möglich ist. Spezielle Markierungen können dabei z.B. Prägungen, Aufdrucke, Ausnehmungen, Erhebungen oder sonstige geeignete Merkmale sein.

In einer weiteren bevorzugten Ausgestaltung der Erfindung weist die Bildaufnahmeeinrichtung eine optische Achse auf, wobei die optische Achse bei der Aufnahme der 2D-Bilder gegenüber einer Vertikalen, insbesondere um 10° bis 50°, bevorzugt um 20° bis 40°, geneigt ist. Auf diese Weise wird bei einer Variation der Einschubtiefe oder der Einschubhöhe des Gargutträgers der Aufnahmewinkel stärker variiert, da sich dabei stets sowohl der Abstand des Garguts zur Bildaufnahmeeinrichtung als auch der der Abstand des Garguts zur optischen Achse der Bildaufnahmeeinrichtung ändert. Bevorzugt ist die optische Achse aus einer Perspektive quer zur Einschubrichtung und quer zur senkrecht zum Garraumboden verlaufenden Höhenrichtung geneigt.

In einer weiteren bevorzugten Ausgestaltung der Erfindung wird zumindest ein Teil der 2D-Bilder während eines Einschiebens des Gargutträgers in den Garraum aufgenommen. Das Einschieben des Gargutträgers in den Garraum, insbesondere wobei der Gargutträger auf einer Gargutträgeraufnahme (z.B. in Form von Führungsschienen) geführt wird, kann im Wesentlichen als Linearbewegung in einer parallel zum Garraumboden verlaufenden horizontalen Ebene beschrieben werden. Anhand dieser Randbedingung kann die Variation der Lage des Garguts und/oder der Einschubposition des Gargutträgers zwischen unterschiedlichen 2D-Bildern besonders einfach und präzise berechnet werden. Hierdurch wird die Auswertung erheblich vereinfacht, so dass das Verfahren mit weniger Aufwand implementiert werden kann. Das Einschieben kann dabei manuell oder automatisch mittels einer motorisch verstellbaren Gargutträgeraufnahme (z.B. in Form eines Teleskopeinzugs) erfolgten.

Vorzugsweise erfolgt das Einschieben durch das motorische Einfahren der Gargutträgeraufnahme und insbesondere mit konstanter Geschwindigkeit. Auf diese Weise wird sichergestellt, dass die Variation der Einschubposition nahezu als ideale Linearbewegung in einer parallel zum Garraumboden verlaufenden horizontalen Ebene mit bekanntem Start- und Endpunkt beschrieben werden kann, was eine noch präzisere Ermittlung der Lage des Garguts und/oder der Einschubposition des Gargutträgers ermöglicht. Insbesondere können hierbei die Steuer- oder Regelsignale für die Gargutträgeraufnahme zur Bestimmung der genauen Einschubposition verwendet werden. Durch die Aufnahme der 2D-Bilder während des Einschiebens des Gargutträgers mit konstanter Geschwindigkeit kann die Bestimmung der jeweiligen Lage des Garguts und/oder der jeweiligen Einschubposition des Gargutträgers in besonders einfacher Weise erfolgen, wodurch die Auswertung erheblich vereinfacht wird.

Erfindungsgemäß wird zumindest ein Teil der 2D-Bilder während einer motorischen Höhenverlagerung einer Gargutträgeraufnahme aufgenommen, insbesondere wobei die Höhenverlagerung mit konstanter Geschwindigkeit erfolgt. Die Höhenverlagerung des Gargutträgers im Garraum, insbesondere wobei der Gargutträger auf einer Gargutträgeraufnahme (z.B. in Form von Führungsschienen) geführt wird, kann nahezu als ideale Linearbewegung in einer senkrecht zum Garraumboden verlaufenden Richtung mit bekanntem Start- und Endpunkt beschrieben werden. Anhand dieser Randbedingung kann die Variation der Lage des Garguts und/oder der Einschubposition des Gargutträgers zwischen unterschiedlichen 2D-Bildern besonders einfach und präzise berechnet werden. Hierdurch wird die Auswertung erheblich vereinfacht, so dass das Verfahren mit weniger Aufwand implementiert werden kann. Durch die Aufnahme der 2D-Bilder während der Höhenverlagerung des Gargutträgers mit konstanter Geschwindigkeit kann die Bestimmung der jeweiligen Lage des Garguts und/oder der jeweiligen Einschubposition des Gargutträgers in besonders einfacher Weise erfolgen, wodurch die Auswertung erheblich vereinfacht wird. Das erfindungsgemäße Gargerät weist einen Garraum zur Aufnahme eines auf einem Gargutträger positionierten Garguts, eine Behandlungseinrichtung zur Behandlung des Garguts, eine Steuereinrichtung zur Steuerung zumindest der Behandlungseinrichtung sowie eine Bildaufnahmeeinrichtung zur Aufnahme von Bildern des Garraums auf. Das erfindungsgemäße Gargerät zeichnet sich dadurch aus, dass es dazu geeignet und ausgebildet ist, das Verfahren nach einem der Ansprüche 1 bis 7 durchzuführen.

Beispielsweise ist das Gargerät mittels der der Steuereinrichtung zur Durchführung eines Verfahrens nach einem der Ansprüche 1 bis 7 konfiguriert.

Aus dem erfindungsgemäßen Gargerät ergeben sich insbesondere die gleichen Vorteile wie die des erfindungsgemäßen Verfahrens.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand eines der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: eine Ausführungsform eines erfindungsgemäßen Gargeräts;
- Fig. 2: das erfindungsgemäße Gargerät aus Fig. 1 bei variierter Einschubtiefe des Gargutträgers;
- Fig. 3: eine weitere Ausführungsform des erfindungsgemäßen Gargerätes;
- Fig. 4: eine weitere Ausführungsform des erfindungsgemäßen Gargerätes; und
- Fig. 5: das erfindungsgemäße Gargerät aus Fig. 4 bei variierter Einschubhöhe des Gargutträgers.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

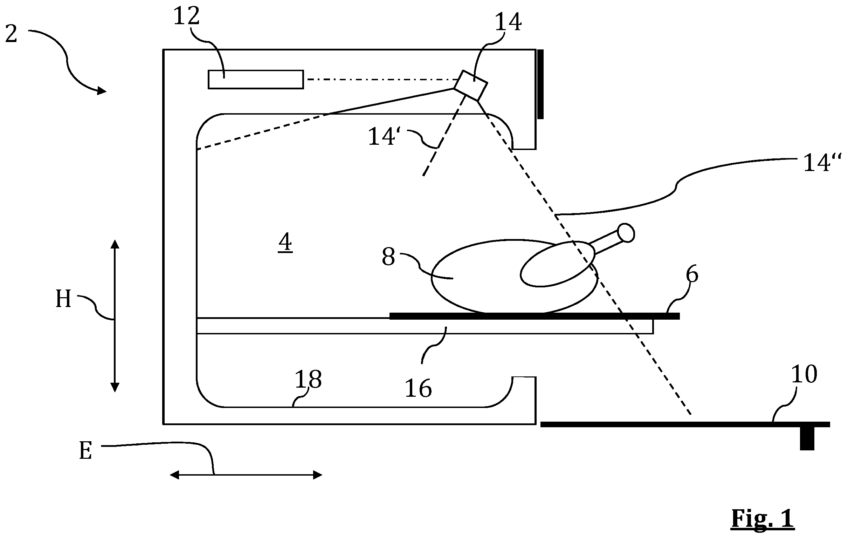

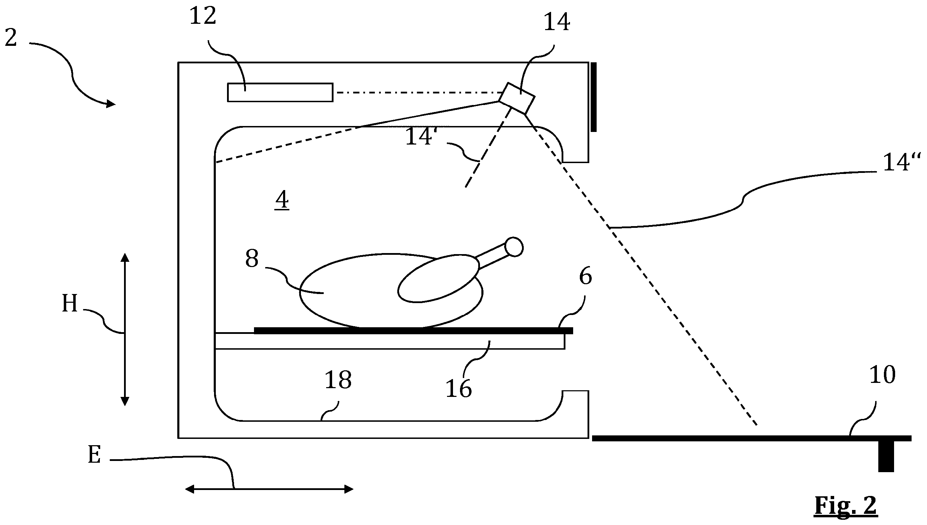

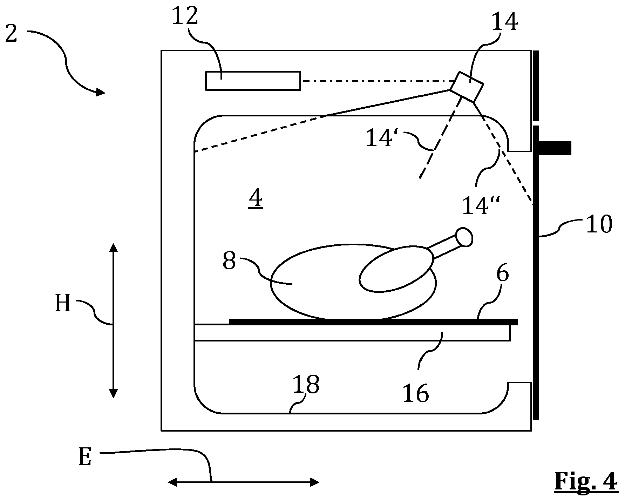

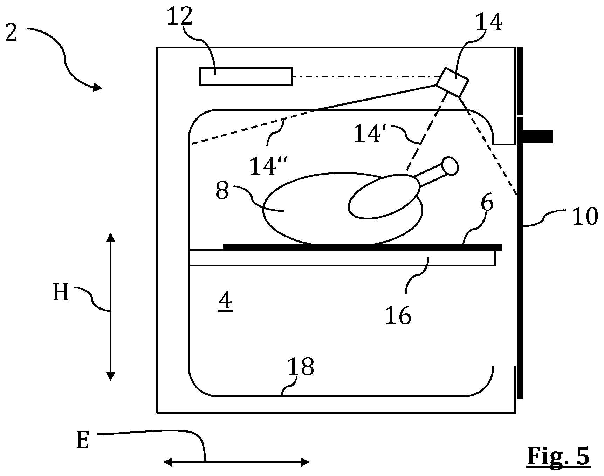

Die Figuren 1 bis 5 zeigen verschiedene Ausführungsformen eines erfindungsgemäßen Gargeräts 2 umfassend einen durch eine Garraumtür 10 verschließbaren Garraum 4 zur Aufnahme eines auf einem Gargutträger 6 angeordneten Garguts 8. Das Gargerät 2 weist eine nicht näher dargestellte Behandlungseinrichtung zur Behandlung des Garguts 8 sowie eine Steuereinrichtung 12 zur Steuerung der Behandlungseinrichtung auf. Ferner weist das Gargerät 2 eine mit der Steuereinrichtung 12 signalübertragend verbundene Bildaufnahmeeinrichtung 14 in Form einer Kamera zur Aufnahme von Bildern des Garraums 4 auf. Die Bildaufnahmeeinrichtung 14 ist dazu ausgebildet, 2D-Bilder von Objekten innerhalb und außerhalb des Garraums 4 aufzunehmen, die sich im Erfassungsbereich 14" der Bildaufnahmeeinrichtung 14 befinden. Der Gargutträger 6 lagert auf einer Gargutträgeraufnahme 16 (z.B. in Form eines Teleskopeinzugs) und ist dadurch präzise entlang der Einschubrichtung E in seiner Einschubtiefe (vgl. Figuren 1 und 2) und/oder entlang der senkrecht zum Garraumboden 18 verlaufenden Höhenrichtung H in seiner Einschubhöhe (vgl. Figuren 4 und 5) variierbar. Das Gargerät 2 ist dazu geeignet und ausgebildet, mittels der Bildaufnahmeeinrichtung 14 von dem Gargut 8 eine Mehrzahl von zeitlich hintereinander aufgenommen 2D-Bildern zu erstellen, auf denen sich der Gargutträger 6 jeweils in einer anderen Einschubposition befindet, und aus dem Vergleich geometrischer Daten des Garguts 8 auf den 2D-Bildern 3D-Informationen über die Form und/oder die Abmessungen des Garguts 8 zu generieren, wobei diese 3D-Informationen von der Steuereinrichtung 12 bei der Steuerung der Behandlungseinrichtung berücksichtigt werden.

Die Steuereinrichtung 12 dient hierbei als Auswerteeinrichtung, mit der die aufgenommenen 2D-Bilder zur Generierung der 3D-Informationen über das Gargut 8 ausgewertet werden. Hierbei ist die Steuereinrichtung 12 dazu geeignet und ausgebildet, geometrische Daten des Garguts 8 und/oder des Gargutträgers 6 auf den 2D-Bildern zu erfassen und zu vergleichen. Ferner ist die Steuereinrichtung 12 dazu geeignet und ausgebildet, anhand der aus unterschiedlichen Aufnahmeblickwinkeln aufgenommenen 2D-Bilder des Garguts 8 3D-Informationen über das Gargut 8 zu generieren. Darüber hinaus ist die Steuereinrichtung 12 dazu geeignet und ausgebildet, anhand der 3D-Informationen Rückschlüsse auf die Art, die Menge, die Masse und/oder weitere Eigenschaften des Garguts 8 zu schließen. Auf Basis dieser Daten kann der Garprozess präzise auf das zuzubereitende Gargut 8 abgestimmt werden, wodurch ein besseres Garergebnis erzielt wird.

Bei der Generierung der 3D-Informationen werden die die jeweiligen Einschubpositionen des auf den unterschiedlichen 2D-Bildern abgebildeten Gargutträgers 6 miteinander verglichen. Die Variation der Einschubposition des Gargutträgers 6 zwischen unterschiedlichen 2D-Bildern kann dabei sensorisch und/oder mittels Bildauswertung ermittelt werden.

Die optische Achse 14' der Bildaufnahmeeinrichtung ist aus einer Perspektive senkrecht zur Höhenrichtung H sowie senkrecht zur Einschubrichtung E gegenüber einer Vertikalen geneigt. Auf diese Weise wird bei einer Variation der Einschubtiefe oder der Einschubhöhe des Gargutträgers 6 der Aufnahmewinkel stärker variiert, da sich dabei stets sowohl der Abstand des Garguts 8 zur Bildaufnahmeeinrichtung 14 als auch der der Abstand des Garguts 8 zur optischen Achse der Bildaufnahmeeinrichtung 14 ändert.

Figuren 1 und 2 zeigen eine Ausführungsform, bei der zumindest ein Teil der 2D-Bilder während eines Einschiebens des Gargutträgers 6 in den Garraum 4 aufgenommen wird. Das Einschieben kann dabei manuell erfolgen, wobei beispielsweise der auf der Gargutträgeraufnahme 16 abgestellte Gargutträger 6 von einem Bediener entlang der Einschubrichtung E von der in Fig. 1 gezeigten, teilweise ausgezogenen Position in die in Fig. 2 gezeigte, eingeschobene Position überführt wird. Bevorzugt erfolgt das Einschieben durch das motorische Einfahren der Gargutträgeraufnahme 16 und insbesondere mit konstanter Geschwindigkeit. Die Gargutträgeraufnahme 16 kann dabei über einen (hier nicht dargestellten) Antrieb angetrieben werden, der insbesondere mit der Steuereinheit 12 signalübertragend verbunden ist. In diesem Fall können zur Bestimmung der genauen Einschubposition des Gargutträgers 16 die Steuer- oder Regelsignale des Antriebs berücksichtigt werden.

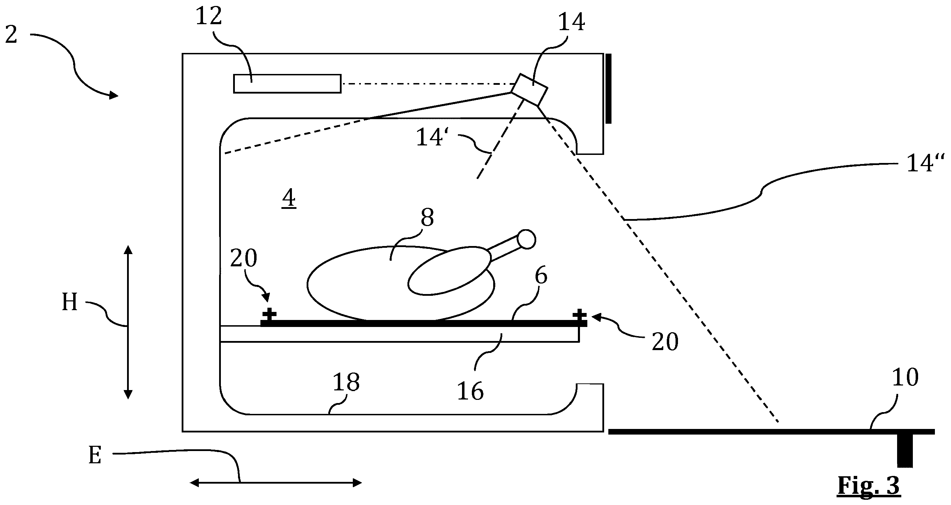

Fig. 3 zeigt eine Ausführungsform, bei der der Gargutträger 6 spezielle Markierungen 20 (jeweils stark vereinfacht als Kreuze dargestellt) aufweist, die zur präziseren Ermittlung der Variation der Einschubposition mittels Bildauswertung dienen. Diese Markierungen 20 können z.B. in Form von Prägungen, Aufdrucken, Ausnehmungen, Erhebungen oder sonstigen optisch erkennbaren Merkmalen ausgebildet sein und bei der Bildauswertung alternativ oder zusätzlich zu der in der Regel vorab bekannten Geometrie und/oder dem Aussehen des Gargutträgers 6 berücksichtigt werden.

Figuren 4 und 5 zeigen eine Ausführungsform, bei der zumindest ein Teil der 2D-Bilder während einer motorischen Höhenverlagerung der Gargutträgeraufnahme 16 aufgenommen wird. Der auf der Gargutträgeraufnahme 16 lagernde Gargutträger 6 wird dabei durch einen (hier nicht dargestellten) Antrieb angetrieben und entlang der Höhenrichtung H beispielsweise von der in Fig. 4 gezeigten, unteren Position in die in Fig. 5 gezeigte, obere Position überführt. Die Höhenverlagerung erfolgt bevorzugt mit konstanter Geschwindigkeit. Der Antrieb ist insbesondere signalübertragend mit der Steuereinheit verbunden, so dass die Steuer- oder Regelsignale des Antriebs zur Bestimmung der genauen Einschubposition des Gargutträgers 16 berücksichtigt werden können.

## Patentansprüche

1. Verfahren zum Betreiben eines Gargeräts (2) mit
einem Garraum (4) zur Aufnahme eines auf einem Gargutträger (6) positionierten Garguts (8),
einer Behandlungseinrichtung zur Behandlung des Garguts (8),
einer Steuereinrichtung (12) zur Steuerung zumindest der Behandlungseinrichtung sowie
mit einer Bildaufnahmeeinrichtung (14) zur Aufnahme von Bildern des Garraums (4), wobei mittels der Bildaufnahmeeinrichtung (14) von dem Gargut (8) eine Mehrzahl von zeitlich hintereinander aufgenommen 2D-Bildern erstellt wird, auf denen sich der Gargutträger (6) jeweils in einer anderen Einschubposition befindet,
wobei die Einschubposition zumindest hinsichtlich ihrer Einschubhöhe und/oder ihrer Einschubtiefe variiert wird, und aus dem Vergleich geometrischer Daten des Garguts (8) auf den 2D-Bildern 3D-Informationen über die Form und/oder die Abmessungen des Garguts (8) generiert werden und diese 3D-Informationen bei der Steuerung der Behandlungseinrichtung berücksichtigt werden,
**dadurch gekennzeichnet, dass**
eine Variation der Einschubposition des Gargutträgers (6) zwischen unterschiedlichen 2D-Bildern mittels einer Bildauswertung ermittelt wird
und/oder
zumindest ein Teil der 2D-Bilder während einer motorischen Höhenverlagerung einer Gargutträgeraufnahme (16) aufgenommen wird.

2. Verfahren nach Anspruch 1, wobei bei der Generierung der 3D-Informationen die jeweiligen Einschubpositionen des auf den unterschiedlichen 2D-Bildern abgebildeten Gargutträgers (6) miteinander verglichen werden.

3. Verfahren nach Anspruch 1 oder 2, wobei eine Variation der Einschubposition des Gargutträgers (6) zwischen unterschiedlichen 2D-Bildern sensorisch ermittelt wird.

4. Verfahren nach einem der vorhergehenden Ansprüche, wobei zur Ermittlung der Variation der Einschubposition des Gargutträgers (6) zwischen unterschiedlichen 2D-Bildern spezielle Markierungen (20) auf dem Gargutträger berücksichtigt werden, sofern eine Variation der Einschubposition des Gargutträgers (6) zwischen unterschiedlichen 2D-Bildern mittels einer Bildauswertung ermittelt wird.

5. Verfahren nach einem der vorhergehenden Ansprüche, wobei die Bildaufnahmeeinrichtung (14) eine optische Achse (14') aufweist und die optische Achse (14') bei der Aufnahme der 2D-Bilder gegenüber einer Vertikalen, insbesondere um 10° bis 50°, bevorzugt um 20° bis 40°, geneigt ist.

6. Verfahren nach einem der vorhergehenden Ansprüche, wobei zumindest ein Teil der 2D-Bilder während eines Einschiebens des Gargutträgers (6) in den Garraum (4) aufgenommen wird.

7. Verfahren nach dem vorhergehenden Anspruch, wobei das Einschieben durch das motorische Einfahren der Gargutträgeraufnahme (16) und insbesondere mit konstanter Geschwindigkeit erfolgt.

8. Gargerät (2) mit
einem Garraum (4) zur Aufnahme eines auf einem Gargutträger (6) positionierten Garguts (8),
einer Behandlungseinrichtung zur Behandlung des Garguts (8),
einer Steuereinrichtung (12) zur Steuerung zumindest der Behandlungseinrichtung, einer Bildaufnahmeeinrichtung (14) zur Aufnahme von Bildern des Garraums (4), sowie mit einer motorisch verstellbaren Gargutträgeraufnahme,
**dadurch gekennzeichnet, dass**
das Gargerät (2) dazu geeignet und ausgebildet ist, ein Verfahren nach einem der vorhergehenden Ansprüche auszuführen.

## Claims

1. Method for operating a cooking appliance (2) comprising
a cooking chamber (4) for receiving food (8) positioned on a food carrier (6),
a treatment device for treating the food (8),
a control device (12) for controlling at least the treatment device, and
an image recording device (14) for recording images of the cooking chamber (4),
a plurality of 2D images of the food (8), recorded successively over time, being produced by means of the image recording device (14), on each of which images the food carrier (6) is located in a different insertion position,
the insertion position being varied at least with regard to its insertion height and/or its insertion depth, and 3D information about the shape and/or dimensions of the food (8) being generated from the comparison of geometric data of the food (8) on the 2D images and this 3D information being taken into account when controlling the treatment device,
**characterised in that,**
a variation of the insertion position of the food carrier (6) between different 2D images is determined by means of an image analysis
and/or
at least some of the 2D images are recorded during a motorised height displacement of a food carrier holder (16).

2. Method according to claim 1, wherein the respective insertion positions of the food carrier (6) depicted on the different 2D images are compared with one another during the generation of the 3D information.

3. Method according to either claim 1 or claim 2, wherein a variation of the insertion position of the food carrier (6) between different 2D images is determined by sensors.

4. Method according to any of the preceding claims, wherein special markings (20) on the food carrier are taken into account to determine the variation in the insertion position of the food carrier (6) between different 2D images, provided that a variation in the insertion position of the food carrier (6) between different 2D images is determined by means of an image analysis.

5. Method according to any of the preceding claims, wherein the image recording device (14) has an optical axis (14') and the optical axis (14') is inclined relative to a vertical, in particular by 10° to 50°, preferably by 20° to 40°, when recording the 2D images.

6. Method according to any of the preceding claims, wherein at least some of the 2D images are recorded during insertion of the food carrier (6) into the cooking chamber (4).

7. Method according to the preceding claim, wherein the insertion is carried out by the motorised retraction of the food carrier holder (16) and in particular at a constant speed.

8. Cooking appliance (2) comprising
a cooking chamber (4) for receiving food (8) positioned on a food carrier (6),
a treatment device for treating the food (8),
a control device (12) for controlling at least the treatment device,
an image recording device (14) for recording images of the cooking chamber (4), and a motor-adjustable food carrier holder,
**characterised in that,**
the cooking appliance (2) is suitable for and designed to carry out a method according to any of the preceding claims.

## Revendications

1. Procédé permettant de faire fonctionner un appareil de cuisson (2) comportant
un espace de cuisson (4) pour la réception d'un aliment à cuire (8) positionné sur un support pour aliment à cuire (6),
un dispositif de traitement pour le traitement de l'aliment à cuire (8),
un dispositif de commande (12) pour la commande d'au moins le dispositif de traitement et
comportant un dispositif d'enregistrement d'images (14) pour l'enregistrement d'images de l'espace de cuisson (4),
dans lequel une pluralité d'images 2D de l'aliment à cuire (8) enregistrées les unes après les autres dans le temps et sur lesquelles le support pour aliment à cuire (6) se trouve respectivement dans une autre position d'insertion est créée au moyen du dispositif d'enregistrement d'images (14),
dans lequel la position d'insertion est modifiée au moins en ce qui concerne sa hauteur d'insertion et/ou sa profondeur d'insertion et des informations 3D concernant la forme et/ou les dimensions de l'aliment à cuire (8) sont générées à partir de la comparaison de données géométriques de l'aliment à cuire (8) sur les images 2D, et lesdites informations 3D sont prises en compte lors de la commande du dispositif de traitement,
**caractérisé en ce que**
une variation de la position d'insertion du support pour aliment à cuire (6) entre différentes images 2D est déterminée au moyen d'une évaluation d'image
et/ou
au moins une partie des images 2D est enregistrée pendant un déplacement en hauteur motorisé d'un réceptacle pour support pour aliment à cuire (16).

2. Procédé selon la revendication 1, dans lequel, lors de la génération des informations 3D, les positions d'insertion respectives du support pour aliment à cuire (6) représenté sur les différentes images 2D sont comparées entre elles.

3. Procédé selon la revendication 1 ou 2, dans lequel une variation de la position d'insertion du support pour aliment à cuire (6) entre différentes images 2D est déterminée par des capteurs.

4. Procédé selon l'une des revendications précédentes, dans lequel, pour déterminer la variation de la position d'insertion du support pour aliment à cuire (6) entre différentes images 2D, on prend en compte des marquages spéciaux (20) sur le support pour aliment à cuire, dans la mesure où une variation de la position d'insertion du support pour aliment à cuire (6) entre différentes images 2D est déterminée au moyen d'une évaluation d'image.

5. Procédé selon l'une des revendications précédentes, dans lequel le dispositif d'enregistrement d'images (14) présente un axe optique (14') et l'axe optique (14') est incliné par rapport à une verticale, en particulier de 10° à 50°, de préférence de 20° à 40°, lors de l'enregistrement des images 2D.

6. Procédé selon l'une des revendications précédentes, dans lequel au moins une partie des images 2D est enregistrée pendant une insertion du support pour aliment à cuire (6) dans l'espace de cuisson (4).

7. Procédé selon la revendication précédente, dans lequel l'insertion est effectuée par l'introduction motorisée du réceptacle pour support pour aliment à cuire (16) et en particulier à une vitesse constante.

8. Appareil de cuisson (2) comportant
un espace de cuisson (4) pour la réception d'un aliment à cuire (8) positionné sur un support pour aliment à cuire (6),
un dispositif de traitement pour le traitement de l'aliment à cuire (8),
un dispositif de commande (12) pour la commande d'au moins le dispositif de traitement,
un dispositif d'enregistrement d'images (14) pour l'enregistrement d'images de l'espace de cuisson (4), et comportant un réceptacle pour support pour aliment à cuire réglable par moteur,
**caractérisé en ce que**
l'appareil de cuisson (2) est adapté et configuré pour exécuter un procédé selon l'une des revendications précédentes.
